Europäisches Patentamt

European Patent Office

Office européen des brevets

(11) Veröffentlichungsnummer: **0 329 787**

**A1**

# EUROPÄISCHE PATENTANMELDUNG
## veröffentlicht nach Art. 158 Abs. 3
### EPÜ

(21) Anmeldenummer: 88903119.1

(51) Int. Cl.⁴: **B23K 26/00**

(22) Anmeldetag: 28.08.87

(86) Internationale Anmeldenummer:
PCT/SU87/00098

(87) Internationale Veröffentlichungsnummer:
WO 89/01841 (09.03.89 89/06)

(43) Veröffentlichungstag der Anmeldung:
30.08.89 Patentblatt 89/35

(84) Benannte Vertragsstaaten:
AT CH DE FR GB IT LI

(71) Anmelder: TSENTRALNOE
KONSTRUKTORSKOE BJURO UNIKALNOGO
PRIBOROSTROENIA AKADEMII NAUK SSR
ul. Butlerova, 15
Moscow, 117342(SU)

Anmelder: KUIBYSHEVSKY AVIATSIONNY
INSTITUT IMENI AKADEMIKA S.P.KOROLEVA
ul. Molodogvardeiskaya, 151
Kuibyshev, 443645(SU)

(72) Erfinder: DANILOV, Viktor Anatolievich
Frunzenskaya nab., 28-88
Moscow, 119146(SU)
Erfinder: POPOV, Vladimir Viktorovich
ul. 1905 goda, 4-20
Moscow, 123022(SU)
Erfinder: PROKHOROV, Alexandr Mikhailovich
ul. Zvenigorodskaya, 14-10
Moscow, 121433(SU)
Erfinder: SISAKYAN, Iosif Norairovich
Leninsky pr., 13-13
Moscow, 107071(SU)
Erfinder: SAGATELYAN, Dmitry Mikhailovich
Smolensky bulvar, 15-31
Moscow, 119121(SU)
Erfinder: SISAKYAN, Elena Vasilievna
Leninsky pr., 13-13
Moscow, 117071(SU)
Erfinder: SOIFER, Viktor Alexandrovich
ul. Pervomaiskaya, 34-51
Kuibyshev, 443002(SU)
Erfinder: AKOPYAN, Vladimir Sergeevich
9 Sokolnicheskaya ul., 4-1-137
Moscow, 107014(SU)
Erfinder: DANILEIKO, Jury Konstantinovich
ul. Solnechnaya, 2-17
Moskovskaya obl. Troitsk, 142092(SU)
Erfinder: NAUMIDI, Leonid Petrovich
ul. Tikhomirova, 7-3-119
Moscow, 129232(SU)
Erfinder: TEREKHIN, Jury Dmitrievich
ul. Polyarnaya, 18-55
Moscow, 129221(SU)
Erfinder: SHORIN, Vladimir Pavlovich
pr. Lenina, 3-629
Kuibyshev, 443002(SU)
Erfinder: MORDASOV, Vasily Ivanovich
ul. Marii Aveide, 27-39
Kuibyshev, 443051(SU)
Erfinder: MURZIN, Sergei Petrovich
pr. Karla Marxa, 498-33
Kuibyshev, 443098(SU)

(74) Vertreter: Patentanwälte Beetz sen. - Beetz
jun. Timpe - Siegfried - Schmitt-Fumian-
Mayr
Steinsdorfstrasse 10
D-8000 München 22(DE)

(54) VERFAHREN UND ANORDNUNG FÜR DIE LASERBEHANDLUNG EINES GEGENSTANDES.

(57) Die Erfindung bezieht sich auf die technische Physik und betrifft insbesondere Verfahren zur Bearbeitung mit dem Laserstrahl. Das Verfahren zur Bearbeitung eines Objekts (5) durch Bestrahlung seiner Oberfläche mit Laserstrahlenbündeln (1) nach Bearbeitungsbereichen (2) der Sollform besteht in der Anwendung einer räumlichen Phasenmodulation der Laserstrahlenbündel (1), die in Abhängigkeit von der Sollform des Bearbeitungsbereichs (2) und einer vorgegebenen Intensitätsverteilung unter gleichzeitiger Schwenkung erfolgt.

Die Einrichtung für die Durchführung des Verfahrens enthält eine Laserstrahlungsquelle (8), auf deren optischer Achse (14) ein optisches System (12) zur Übertragung der Laserstrahlung auf das Objekt (5) liegt, welches mindestens ein Phasenelement (3) der Computeroptik umfaßt, das in Form einer Reflexions- oder einer durchlässigen Platte mit einer Mikrorelief-Oberflächenstruktur ausgeführt ist, die in Abhängigkeit von der Form des Bearbeitungsbereichs (2), der Intensitätsverteilung der Laserstrahlung und der Wellenlänge ($\lambda$) der letzteren bestimmt wird, wobei die Mikroreliefkämme (14) mit einer Höhe (h) ausgeführt sind, die sich vom Fuß (a) zur Spitze (b) hin in einem Wertebereich von 0 bis $\lambda/2$ für die Reflexionsplatte und von 0 bis $\lambda/(n-1)$ für die durchlässige Platte ändert, worin n die Brechungszahl ist.

**FIG. 6**

2

## VERFAHREN UND EINRICHTUNG ZUR BEARBEITUNG EINES OBJEKTS MIT DEM LASERSTRAHL

### Gebiet der Technik

Die Erfindung bezieht sich auf die technische Physik und betrifft insbesondere die Lasertechnik und -technologie, genauer ein Verfahren und eine Einrichtung zur Bearbeitung eines Objekts mit dem Laserstrahl.

### Stand der Technik

In verschiedenen Bereichen der Wissenschaft und Technik, der Industrie und Medizin besteht die Notwendigkeit, eine bestimmte Zone eines Objekts mit Laserstrahlenbündeln bei einer vorgegebenen Dichteverteilung des Energiestroms der Laserstrahlung zu bestrahlen, um eine energetische Bearbeitung durchzuführen. Dieses Problem wird in diesem oder jenem Grad mit mehreren Verfahren zur Bearbeitung eines Objekts mit dem Laserstrahl mit Hilfe verschiedener Ausführungsformen der optischen Systeme der Lasergeräte effektiv gelöst, die potentiellen Möglichkeiten der Materialbearbeitung durch die Laserstrahlenbündel sind aber noch nicht vollkommen realisiert. Da die Laserstrahlung eine relativ teuere Energieform ist, so ist eine der wichtigsten Eigenschaften jedes Verfahrens und jeder Einrichtung die Effektivität der Ausnutzung der Energie der Laser, die die Grundeinheit derartiger Einrichtungen darstellen.

In Abhängigkeit von der Kompliziertheit der Form des Bearbeitungsbereichs können die bestehenden Lasertechnologien vereinbart in drei Bearbeitungsarten mit eigener Spezifik eingesteilt werden: Punktbearbeitung mittels Laser (Herstellung von Grund- und Durchgangsbohrungen, beispielsweise Punktschweissen); Bearbeitung längs einer geraden Linie mittels Laser (beispielsweise Schweissen, Schneiden, Ritzen); Bearbeitung von Mustern komplizierter Form mittels Laser (beispielsweise Wärmebearbeitung, Lithografie, Orna mentieren). Das Wesen der letzteren der aufgezählten, nämlich der kompliziertesten Art - der sogenannten Fassonbearbeitung - besteht darin, dass es notwendig ist, erstens mit Hilfe des optischen Systems ein Laserstrahlenbündel entsprechend der erforderlichen Form und Grösse des Bearbeitungsbereichs zu erzeugen (Stufe des Aufbaus des optischen Bildes) und zweitens eine erforderliche energetische Einwirkung in Grenzen dieses Bearbeitungsbereichs auszuüben )(Stufe der Übertragung des optischen Bildes auf das Objekt).

Die konkrete Form und Grösse des Bearbeitungsbereichs werden durch die Forderungen seitens des jeweiligen Arbeitsganges vorgegeben.

Es sind mehrere Methoden zum Aufbau eines optischen Bildes bekannt, die für Verfahren zur Bearbeitung von Objekten mit dem Laserstrahl verwendet werden. Am weitesten werden ein Kontur-Strahl- und Maskenverfahren (Kontakt- und Projektionsverfahren) angewendet.

Es ist ein Kontur-Strahlverfahren zur Bearbeitung eines Objekts (V.P.Veiko e.a. "Lazernaya obrabotka" ("Bearbeitung mittels Laser"), 1973, Verlag "Lenizdat" (Leningrad, S. 144) mit dem Laserstrahl bekannt, in dem das optische Bild erforderlichen Musters für die Belichtungszeit durch eine aufeinanderfolgende Beleuchtung der vorgegebenen Kontur mit einem mit Hilfe eines Objektivs fokussierten Lichtstrahl synthesiert wird. Der Durchlauf der vorgegebenen Kontur auf dem Objekt erfolgt entweder durch Verscheibung des Objekts oder durch Abtastung mit dem Lichtstrahl. In der Regel wird das Objekt in die Fokalebene des Objektivs gebracht, während die Abtastung durch eine mechanische Verschiebung des optischen Systems der Einrichtung erfolgt. Grundsätzlich wichtig für die Durchführung solch eines Verfahrens ist das Vorhandensein wenigstens einer die Strahlung auf einen Punkt fokussierenden Linse und einer Vorrichtung zur gegenseitigen Verschiebung des Laserstrahlenbündels und des Objekts im optischen System.

Der positive Zug dieses Verfahrens sind ein hoher Ausnutzungsfaktor für die Laserenergie und die Möglichkeit, im Punktbereich hohe Dichtewerte des Energiestroms zu erreichen. Bei der Erzeugung komplizierter Muster ist aber ein derartiges Verfahren wenig produktiv, weil es nicht gestattet, den gesamten Bearbeitungsbereich auf einmal zu belichten. Darüber hinaus gibt dieses Verfahren keine Möglichkeit, die erforderliche Dichteverteilung des Energiestroms der Laserstrahlung auf den Bearbeitungsbereich im optischen Verfahren zu gewährleisten, was die Klasse der in diesem Verfahren realisierten Arbeitsgängen begrenzt. Stellt der Bearbeitungsbereich keine Kontur, sondern ein Flächenstück dar, so kann diese Methode keinen hohen Bearbeitungsgrad sichern.

Es ist ein Maskenverfahren zur Bearbeitung eines Objekts mit dem Laserstrahl (V.P.Veiko e.a. "Lazernaya obrabotka", 1973, Verlag "Lenizdat (Leningrad), S. 136) bekannt, bei dem die Erzeugung des Laserstrahlenbündels vorgegebener Form und Abmessungen durch Bestrahlung der Oberfläche des Objekts nach Bearbeitungsbereichen über eine Schlitzmaske (Schablone) erfolgt, die im optischen System der dieses Verfahren durchführenden Einrichtung angeordnet ist. Die Schlitze in der Maske entsprechen der erforderlichen Form des Bearbeitungsbereichs, während die Abmessungen beibehalten, mit Hilfe des optischen Systems auf die Sollgrösse verringert oder vergrössert werden können. Zur Zeit stehen zwei Modifikationen des Maskenverfahrens: Kontakt- und Projekttionsverfahren zur Verfügung.

Im Kontaktverfahren wird die Maske an das Objekt angedrückt. Dann erfolgt die Belichtung. Der positive Zug dieses Verfahrens ist die Einfachheit des optischen Systems der dieses Verfahren durchführenden Einrichtung. Nachteilig ist bei diesem Verfahren zur Bearbeitung mit dem Laserstrahl die Möglichkeit einer mechanischen Beschädigung des Objekts wegen des Andrucks der Maske an dieses. Das undichte Andrücken führt zu einer Verschlech tecrung des Bearbeitungsgrades wegen der Verzerrungen durch Beugung. Weiterhin muss die Maske verschleissfester und beständiger gegen die Laserstrahlung als das Material des Objekts sein.

Im Projektionsverfahren wird die Maske, bei der die Schlitze der Sollform des Bearbeitungsbereiches entsprechen, durch ein Laserstrahlenbündel beleuchtet. Die auf die Sollgrösse verkleinerte Abbildung der Maske wird mit Hilfe eines Projektionsobjektivs aufgebaut, mit dessen Fokalebene die Oberfläche des zu bearbeitenden Objekts zur Dekkung gebracht wird. Es bestehen mehrere Ausführungsformen der optischen Anordnung zur Verwirklichung des Projektionsverfahrens und dementsprechend auch der dieses Verfahren durchführenden Einrichtungen ("Lazernaya i. elektronnoluchevaya obrabotka materialov" ("Materialbearbeitung mit einem Laser- und Elektronenstrahl"), Handbuch, N.N.Rykalin e.a. 1985, S. 445 bis 449. Im gleichen Handbuch sind die Parameter der bei der Bearbeitung mit dem Laserstrahl verwendeten Laser und der Materialbearbeitungslasergeräte angegeben.

Den Masken-Bearbeitungsverfahren (dem Kontaktebenso wie dem Projektionsverfahren) sind grosse Laserenergieverluste auf den undurchsichtigen Abschnitten der Maske sowie die Unmöglichkeit, eine vorgegebene Dichteverteilung der Laserstrahlenergie über das gesamte Feld des Bearbeitungsbereichs zu schaffen, eigen.

Das Projektions- und Konturverfahren können miteinander verbunden werden. In diesem Fall erzeugt das optische Projektionssystem eine verkleinerte Abbildung der Maske in der Fokalebene des Objektivs, während das Abtastgerät eine optische Abbildung des erforderlichen Musters nach einer aufeinanderfolgenden Beleuchtung synthesiert.

Es ist eine Einrichtung bekannt, die das Projektionsverfahren zur Bearbeitung von Objekten (Materialien) mit dem Laserstrahl durchführt und zur Anpassung von Parameters der passiven Elemente der integrierten Schalt kreise ("Elektronnaya promyschlennost", H. 1, 1976, (Moskau), V.Z.Vysotskii e.a. "Ustanovka s projektsionnoi opticheskoi sistemoi dlya podgonki rezistorov" ("Anlage mit einem optischen Projektionssystem zur Widerstandsanpassung"), S. 22 bis 23) vorgesehen ist. Diese Einrichtung enthält eine Laserstrahlungsquelle, auf deren optischer Achse ein optisches System zur Übertragung der Laserstrahlung auf das zu bearbeitende Objekt liegt. Der technologische Prozess der Widerstandsanpassung besteht in der Wegtragung des überschüssigen Teiles von Folienwiderstandsbahnen durch Verdampfen des Materials des Objekts durch Laserstrahlung, bis der vorgegebene Nennwert des Widerstandes erreicht worden ist. Zu diesem Zweck erzeugt das optische System der Einrichtung in der zu bearbeitenden Ebene einen Fleck der Laserstrahlung in Form eines Geradenstücks von 7 bis 10 mm Länge und von 1 mm Breite mit einer homogenen Energiedichteverteilung nach der Länge und Breite. In der Einrichtung ist eine Laserstrahlungsquelle eingesetzt, die einen Laser enthält, der in der Betriebsart der Gütemodulation mit einer Wellenlänge $\lambda = 1,06$ µm arbeitet. Am Ausgang des Lasers wird die Laserstrahlung durch eine positive Linse auf eine Zylinderlinse des optischen Systems fokussiert, die unmittelbar vor dem Objektiv liegt. Hinter der Zylinderlinse liegt eine Maske mit einem Schlitz erforderlicher Form.Die Erzeugende der Zylinderlinse ist senkrecht zum Schlitz ausgerichtet, damit die Kanten des letzteren durch ein Objektiv verzerrungsfrei abgebildet werden, das eine hohe Auflösung besitzt. Die Ebene der Abbildung der quer zum Schlitz ausgerichteten Linien liegt ausserhalb des Bearbeitungsbereichs, was in der Schlitzabbildung eine relativ homogene, von der Mitte zum Rand hin langsam abfallende Dichteverteilung der Laserstrahlungsenergie bedingt. Die Schnittlänge wird durch den Bereich einer gleichmässigen Energiedichteverteilung mit Hilfe einer speziellen Blende begrenzt, die in der Nähe der Oberfläche des zu bearbeitenden Objekts liegt.

In dieser Einrichtung machen sich die Schwierigkeiten der Erzeugung der Sollform des Bearbeitungsbereichs (hier eines schmalen Streifens) mit einer vorgegebenen (hier gleichmässigen) Dichteverteilung der Laserstrahlenergie über den Bereich unter der Voraussetzung einer höchstmöglichen Ausnutzung der Laserenergie mit Hilfe herkömmlicher optischer Elemente anschaulich bemerkbar. Das optische System ist kompliziert, benötigt eine Feinjustierung, auf der Maske treten unvermeidliche Energieverluste auf.

Jedes der bekannten Verfahren und Einrichtungen zur Bearbeitung eines Objekts mit dem Laserstrahl weist eigene Vor- und Nachteile sowie ein eigenes Anwendungsgebiet auf. Weder eines der bestehenden Verfahren zur Bearbeitung der Objekte mit dem Laserstrahl nach den Bereichen vorgegebener Form noch eine Einrichtung können aber eine gleichzeitige Kombination derartiger Funktionsfähigkeiten sichern, wie sie die Schaffung der erforderlichen Dichteverteilung und die Konzentration der gesamten Energie des Laserstrahlenbündels auf den Bearbeitungsbereich der Sollform sind.

Offenbarung der Erfindung

Der Erfindung liegt die Aufgabe zugrunde, ein derartiges Verfahren und eine derartige Einrichtung zur Bearbeitung eines Objekts mit dem Laserstrahl zu schaffen, die es gestatten, die erforderliche Dichteverteilung der Laserstrahlenergie über den Bearbeitungsbereich der Sollform bei einer totalen Konzentration der Laserenergie auf diesen unter Vereinfachung des optischen Systems der Einrichtung zu erzielen, was es erlaubt, die Klasse der durch dieses Verfahren durchzuführenden Arbeitsgänge zu erweitern, den Ausnutzungsfaktor für die Laserstrahlenergie zu erhöhen, die Leistung zu steigern, die Zuverlässigkeit und die Genauigkeit zu erhöhen sowie den Grad der Bearbeitung des Objekts mit dem Laserstrahl zu verbessern.

Die gestellte Aufgabe wird dadurch gelöst, dass in dem Verfahren zur Bearbeitung eines Objekts durch Bestrahlung seiner Oberfläche mit mindestens einem Laserstrahlenbündel nach Bearbeitungsbereichen der Sollform gemäss der Erfindung eine räumliche Phasenmodulation des Laserstrahlenbündels angewendet wird, die in Abhängigkeit von einer vorgegebenen Intensitätsverteilung über den Bearbeitungsbereich unter gleichzeitiger Schwenkung der optischen Achse des Laserstrahlenbündels vorgenommen wird.

Es ist zweckmässig, dass im erfindungsgemässen Verfahren zur Bearbeitung eines Objekts mit dem Laserstrahl das der räumlichen Phasenmodulation unterzogene Bündel in Drehung um seine optische Achse versetzt wird.

Zweckmässig ist, dass im Verfahren zur Bearbeitung eines Objekts mit dem Laserstrahl, wo das Objekt mit mindestens einem Bündel einer unsichtbaren Laserstrahlung bearbeitet wird, gemäss der Erfindung das Bündel der unsichtbaren Laserstrahlung auf die Bearbeitungsbereiche der Oberfläche des Objekts durch ein Bündel einer sichtbaren Laserstrahlung mit der gleichen Intensitätsverteilung gelenkt wird.

Die gestellte Aufgabe wird auch dadurch gelöst, dass in der Einrichtung zur Durchführung des Verfahrens zur Bearbeitung eines Objekts mit dem Laserstrahl, die eine Laserstrahlungsquelle enthält, auf deren optischer Achse ein optisches System zur Übertragung der Laserstrahlung auf das Objekt liegt, gemäss der Erfindung das optische System mindestens ein Phasenelement der Computeroptik aufweist, das für eine Schwenkung des Laserstrahlenbündels, für seine räumliche Phasenmodulation und eine Umverteilung seiner Energie über den Bearbeitungsbereich der Sollform sorgt und in Form einer Reflexions- oder einer durchlässigen Platte mit einer Mikrorelief-Oberflächenstruktur ausgeführt ist, die in Abhängigkeit von der Sollform des Bearbeitungsbereichs, der Intensitätsverteilung der Laserstrahlung über diesen und von der Wellenlänge der letzteren be stimmt wird, wobei die Mikroreliefkämme mit einer Höhe ausgeführt sind, die sich vom Fuss des Kammes zu dessen Spitze hin in einem Wertebereich von 0 bis $\lambda/2$ für die Reflexionsplatte und in einem Wertebereich von 0 bis $\lambda/(n-1)$ für die durchlässige Platte ändert, worin n die Brechungszahl des Materials der durchlässigen Platte ist.

Es ist zulässig, dass in der erfindungsgemässen Einrichtung als Strahlungsquelle eine Quelle gewählt ist, die zwei Laser enthält, von denen einer eine unsichtbare und anderer eine sichtbare Laserstrahlung erzeugt, wobei auf der optischen Achse des zweiten Lasers ein zweites optisches System liegt, das mindestens ein Phasenelement der Computeroptik aufweist und ein sichtbares Bild der Sollform erzeugt, das mit dem unsichtbaren Bild im Bearbeitungsbereich optisch zusammenfällt.

Sinnvoll ist, dass die erfindungsgemässe Einrichtung eine Vorrichtung zur Verschiebung des Phasenelements der Computeroptik bezüglich der optischen Achse der Strahlungsquelle enthält.

Es ist vorteilhaft, dass das optische System in der erfindungsgemässen Einrichtung einen Satz von Phasenelementen der Computeroptik enthält, die in einer Vorrichtung zu deren Verschiebung und Aufnahme angeordnet sind.

Die vorliegende Erfindung gestattet es, die Klasse der durch die Bearbeitung mittels Laser durchzuführenden Arbeitsgänge zu erweitern und den Ausnutzungsfaktor für die Laserstrahlung durch Erweiterung der Möglichkeit einer flexiblen Steuerung der geometrischen Kenngrössen der Laserstrahlenbündel im Bearbeitungsbereich der Oberflächedes zu bearbeitenden Objekts unter Beibehaltung ihrer Energie und Sicherung der erforderlichen Dichteverteilung der Laserstrahlenergie zu erhöhen. Die Erfindung erlaubt es, die Zuverlässigkeit des Verfahrens zur Bearbeitung mit dem Laserstrahl durch Ermöglichung einer hohen Reproduzier barkeit der Ergebnisse der Bearbeitung von Bereichen komplizierter Form zu erhöhen, die Leistung des Verfahrens auf Kosten der Zeit für die Durchführung der komplizierten Arbeitsgänge zu steigern. Ausserdem wird die Optimierung der Parameter der Bearbeitungsvorgänge vereinfacht, was zu einer Erhöhung der Genauigkeit und des Grades der Bearbeitung mit dem Laserstrahl führt, die Anzahl der optischen Elemente im optischen System zur Übertragung der Laserstrahlung auf das zu bearbeitende Objekt verringert, was zu einer Vereinfachung des optischen Systems und zu einer Erhöhung der Betriebszuverlässigkeit der Einrichtung, zu einer Verkleinerung ihrer Abmessungen führt.

Das erfindungsgemässe Verfahren wird mit anderen Verfahren zur Bearbeitung mit dem Laserstrahl einfach vereinigt, was es auch gestattet, die Klasse der durchzuführenden Arbeitsgänge zu erweitern, und die Möglichkeit gibt, den Vorgang der Bearbeitung mit dem Laserstrahl verhältnismässig leicht zu automatisieren, was eine Steigerung seiner Leistung und Zuverlässigkeit zur Folge hat.

Kurze Beschreibung der Zeichnungen

Diese und andere Vorteile der Erfindung werden aus der nachstehenden detaillierten Beschreibung der Ausführungsbeispiele unter Bezugnahme auf die beiliegenden Zeichnungen verständlich sein. Es zeigt:

Fig. 1 ein Prinzipschaltbild einer statischen Ausführungsform des erfindungsgemässen Verfahrens zur Erzeugung eines optischen Bildes des Bearbeitungsbereichs der Sollform mit einer vorgegebenen Intensitätsverteilung über diesen;

Fig. 2 dto. (in Seitenansicht) gemäss der Erfindung;

Fig. 3 dto. mit einer Schwenkung des Laserstrahlenbündels gemäss der Erfindung;

Fig. 4 ein Prinzipschaltbild einer dynamischen Ausführungsform des erfindungsgemässen Verfahrens zur Erzeugung eines optischen Bildes des Bearbeitungsbereichs der Sollform mit einer vorgegebenen Intensitätsverteilung über diesen bei einer fortschreitenden Bewegung eines Phasenelements der Computeroptik in Richtung des Laserstrahlenbündels;

Fig. 5 dto. bei einer Umdrehung des Elements der Computeroptik gemäss der Erfindung;

Fig. 6 ein prinzipielles Strukturbild einer Einrichtung zur Durchführung des erfindungsgemässen Verfahrens zur Bearbeitung eines Objektes mit dem Laserstrahl;

Fig. 7 eine schematische Darstellung eines erfindungsgemässen Phasenelements der Computeroptik (in Seitenansicht);

Fig. 8 dto. (in Draufsicht) gemäss der Erfindung;

Fig. 9 ein prinzipielles Strukturbild einer Einrichtung zur Durchführung des erfindungsgemässen Verfahren mit einer Verschiebung eines räumlich modulierten Bündels über einen Bearbeitungsbereich;

Fig. 10 ein prinzipielles Strukturbild einer Einrichtung zur Durchführung des erfindungsgemässen Verfahrens zur Bearbeitung einer Vielzahl von Bearbeitungsbereichen mit dem Laserstrahl;

Fig. 11 ein prinzipielles Strukturbild einer Einrichtung zur Durchführung des erfindungsgemässen Verfahrens zur Bearbeitung mit dem Laserstrahl durch Lenkung einer unsichtbaren Laserstrahlung in einen Bearbeitungsbereich;

Fig. 12 ein Blockschaltbild einer erfindungsgemässen Einrichtung zur Durchführung von ophthalmologischen Operationen;

Fig. 13 ein Blockschaltbild einer erfindungsgemässen Einrichtung mit einer automatischen Steuerung.

Bevorzugte Ausführungsform der Erfindung

Bei der Entwicklung des Verfahrens zur Bearbeitung eines Objekts mit dem Laserstrahl wurde von praktischen Belangen ausgegangen: auf welche Weise ist es am zweckm mässigsten, die Möglichkeiten der bestehenden Laser für die Lösung verschiedenartiger technologischer Probleme der Materialbearbeitung auszunutzen.

In der Regel hat der Querschnitt der Laserstrahlenbündel eine runde oder rechteckige Form, während das Objekt einer energetischen (thermischen, thermochemischen) Einwirkung nach Bearbeitungsbereichen verschiedenartigster Formen auszusetzen ist. Die Intensitätsverteilung über den Querschnitt des Laserstrahlenbündels wird durch den Innenaufbau des Lasers festgelegt, während gemäss der Technologie im Bearbeitungsbereich ein Temperaturfeld konkreten Profils zu erzeugen ist. Das Laserstrahlenbündel breitet sich geradlinig aus, während sich der Bearbeitungsbereich des Objekts an einem schwer zugänglichen Ort befinden kann. Viele technologische Probleme können gelöst werden, wenn in der zu bearbeitenden Ebene dem Bearbeitungsbereich der Sollform die Laserstrahlenergie zugeführt wird, die über diesen Beriech mit einer vorgegebenen Intensität, wie es sich gehört, verteilt ist. Hierbei ist es erwünscht, dass das zu bearbeitende Objekt geeignet in bezug auf die Laserstrahlungsquelle zu liegen kommt, wobei die Abmessungen des optischen Systems zur Übertragung der Laserstrahlung auf das zu bearbeitende Objekt nicht all zu gross wegen einer grossen Anzahl von zusätzlichen optischen Elementen sein sollten.

Das Hauptanliegen bestand bei der Schaffung des neuen Verfahrens zur Bearbeitung eines Objekts mit dem Laserstrahl darin, dass man im Bearbeitungsbereich rasch, einfach, sicher und ohne Energieverluste einen Fleck einer (sichtbaren und unsichtbaren) Laserstrahlung in Form einer Kontur oder eines Flächenstücks der Sollform mit einer vorgegebenen Energie-oder Leistungsverteilung der Laserstrahlung über diesen Fleck erzeugt, indem man das Laserstrahlenbündel in den Bearbeitungsbereich unter einem Sollwinkel richtet, wobei die Anordnung der zusätzlichen optischen Elemente im optischen System zur Übertragung der Laserstrahlung auf das Objekt entfällt.

Dies wurde durch Entwicklung eines für die Bearbeitung mittels Laser neuen Verfahrens zur Erzeugung des optischen Bildes des Bearbeitungsbereichs erreicht, das in zwei Ausführungsformen - eine statische und eine dynamische - eingeteilt werden kann.

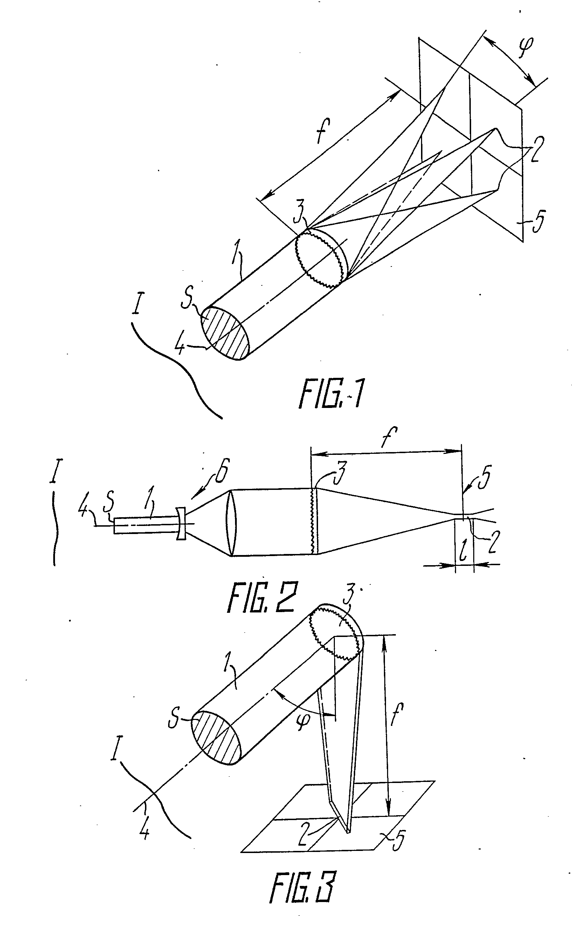

Bei der statischen Ausführungsform des Verfahrens zur Erzeugung eines optischen Bildes des Bearbeitungsbereichs wird eine räumliche Phasenmodulation von Laserstrahlenbündeln 1 (Fig. 1) angewendet, die von der Sollform des Bearbeitungsbereichs 2 und von der vorgegebenen Intensitätsverteilung $I'$ der Laserstrahlung über diesen (PCT/SU 85-00037) (CA, A, 488092) abhängt. Die räumliche Phasenmodulation transformiert ein Laserstrahlenbündel 1 mit einem runden (oder rechteckigen) Querschnitt S, mit einer Intensitätsverteilung 1 über den Querschnitt des Bündels 1 in der Weise, dass die Grösse des Querschnitts S auf $S'$ abnimmt (es wird fokussiert), die Form des Querschnitts S des Bündels 1 sich auf den Sollwert ändert, gleichzeitig erfolgt eine Umverteilung der Intensität über den Querschnitt $S'$ von I auf $I'$, und folglich ändert sich die Dichteverteilung der Laserstrahlenergie für eine bestimmte Zeitspanne.

Die räumliche Phasenmodulation der Laserstrahlenbündel 1 wird durch Phasenelemente 3 der Computeroptik vorgenommen, die zugleich eine Umdrehung des Bündels 1 um einen Winkel von $\phi$ - (PCT/SU 85-00037) (CA, A, 488092) vollführen können.

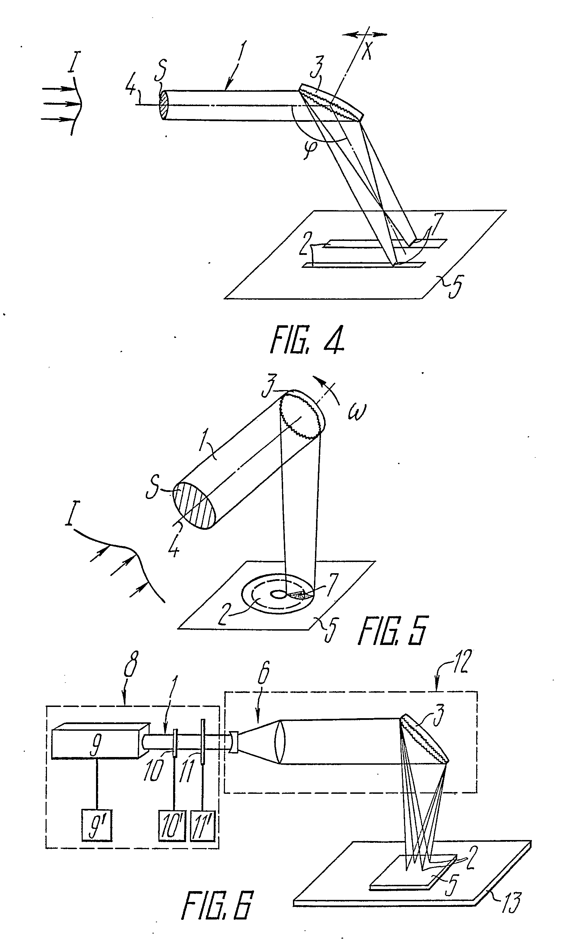

Diese Methode gestattet es, in der Fokalebene des Phasenelements 3 der Computeroptik in einem Abstand f (Fig. 2) von diesem ein Bild des Bearbeitungsbereichs 2 der Sollform mit der erforderlichen Intensitätsverteilung $I'$ über diesen sofort (momentan) zu erzeugen, das ausserhalb der optischen Achse 4 des Ausgangsbündels 1 (Fig. 1, 3) oder auf dieser (Fig. 2) liegt. Die Oberfläche des Objekts 5 wird mit der Fokalebene des Phasenelements 3 der Computeroptik zur Deckung gebracht, und es erfolgt eine Bestrahlung. Die Bildübertragung auf das Objekt 5 erfolgt durch eine energetische Zusammenwirkung des Laserstrahlenbündels 1 mit dem Material des Objekts 5.

In einer Reihe von Fällen ist es zur Verbesserung der Bildgüte und dementsprechend auch des Bearbeitungsgrades zweckmässig, das Laserstrahlenbündel 1 mit Hilfe eines Teleskops 6 (Fig. 2) zu erweitern, wonach es eine geringfügige Divergenz aufweist. Dies ist in dem Falle besonders wichtig, wo das Bündel 1 zu einem schmalen Zylinder fokussiert wird, der in Richtung der optischen Achse 4 des ersteren orientiert und dessen Länge der Länge 1 der Akustik des Phasenelements 3 der Computeroptik gleich ist.

Derartige Methode ist sehr effektiv in dem Fall, wo der Bearbeitungsbereich 2 Masse aufweist, die mit der Grösse des Bündels 1 vergleichbar sind. Falls es notwendig ist, Bereiche 2 sehr kleiner Abmessungen zu bearbeiten, kann das durch das Phasenelement 3 der Computeroptik erzeugte Bild mit Hilfe eines Projektionsobjektivs verkleinert werden.

Falls es nötig ist, Bereiche 2 der Abmessungen zu bearbeiten, die die Grösse des Bündels 1 merklich überschrieten, ist es zweckmässig, die dynamische Ausführungsform des Verfahrens zur Erzeugung eines optischen Bildes des Bearbeitungsbereichs 2 zu benutzen.

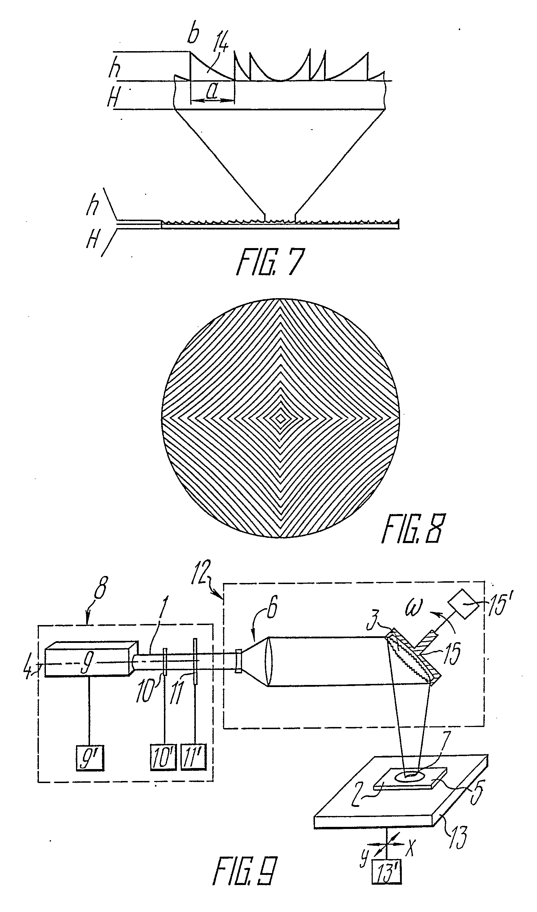

Die dynamische Ausführungsform des Verfahrens besteht darin, dass das volle optische Bild des Bearbeitungsbereichs 2 (Fig. 4, 5) für die Belichtungszeit durch eine aufeinanderfolgende Bestrahlung des Bearbeitungsbereichs 2 der Sollform und -grösse durch ein Laserstrahlenbündel 1 synthesiert wird, das vorher mit Hilfe eines Phasenelements 3 der Computeroptik räumlich moduliert wird. Dazu ist eine gegenseitige Verschiebung des Objekts 5 und des räumlich modulierten Laserstrahlenbündels 1 zu verwirlichen. Dies wird durch eine räumliche Verschiebung entweder des Phasenelements 3 (Fig. 4, 5) der Computeroptik gemäss der Erfindung oder des zu bearbeitenden Objekts 5 erzielt. In Fig. 4 und 5 sind Varianten der Verschiebung des des Phasenelements 3 der Computeroptik in Richtung der optischen Achse 4 des Laserstrahlenbündels 1 mit einer Geschwindigkeit v und seiner Drehung um die eigene Achse mit einer Geschwindigkeit $\omega$ dargestellt.

Derartiges Verfahren zur stückweisen Erzeugung eines Bildes der Sollform und -grösse des Bearbeitungsbereichs 2 aus Einzelelementen 7 dieses Bereichs, deren Form für die Berechnung der Phasenelemente 3 der Computeroptik vorgegeben wird, erweitert die Funktionsfähigkeiten des Verfahrens zur Bearbeitung von Objekten mit dem Laserstrahl noch mehr. Indem man die Intensitätsverteilung $I'$ innerhalb des Einzelelements 7 des Bearbeitungsbereichs 2 und dessen Form variiert sowie die Längsbewegungsgeschwindigkeit v bzw. die Drehgeschwindigkeit ω des Phasenelements 3 der Computeroptik und/oder des Objekts zeitlich variabel v = v(t) bzw. ω = ω (t) wählt, kann man die Durchführung derartiger Arbeitsgänge auf einer grossen Fläche ermöglichen, die mit anderen Verfahren zur Bearbeitung von Objekten mit dem Laserstrahl praktisch unmöglich oder sehr schwer zu realisieren sind.

Nachstehend soll das Verfahren zur Bearbeitung eines Objekts mit dem Laserstrahl am Beispiel einer sehr einfachen Einrichtung für dessen Durchführung veranschaulicht werden. Die Einrichtung enthält eine Laserstrahlungsquelle 8 (Fig. 6), die aus einem Laser 9 mit einer Speisequelle 9', einem Verschluss 10 mit einer Einheit 10' für dessen elektrische Steuerung und einem Laserstrahlungsunterbrecher 11 mit seiner Steuereinheit 11' besteht. Auf der optischen Achse 4 der Quelle 8 ist ein optisches System 12 zur Übertragung der Laserstrahlung auf das zu bearbeitende Objekt 5 angeordnet. Das optische System 12 enthält mindestens ein Phasenelement 3 der Computeroptik. Bei der Notwendigkeit, ein Laserstrahlenbündel zu erweitern, wird in das poptische System 12 ein Teleskop-Kollimator 6 eingeführt. Das zu bearbeitende Objekt 5 ist auf einem Arbeitstisch 13 aufgestellt.

Das Phasenelement 3 (Fig. 7, 8) der Computeroptik ist in Form einer eine Laserstrahlung reflektierenden oder durchlassenden Platte mit einer Mikrorelief-Oberflächenstruktur ausgeführt, die in Abhängigkeit von der Form des Bearbeitungsbereichs 2 (Fig. 6), der Intensitätsverteilung I der Laserstrahlung über diesen und von der Wellenlänge λ der letztgenannten bestimmt wird. Der Querschnitt eines jeden Mikroreliefkammes 14 (Fig. 7) weist die Form eines Zahnes mit einer vertikalen Seite auf. Die andere Seite des Kammes 14 ist nach der Höhe h vom Fuss der Breite a zur Spitze b hin langsam ansteigend ausgeführt. Die auf einem Elektronenrechner berechnete relative Anordnung der Kämme 14 über der Ebene einer Platte der Stärke H weist eine komplizierte Konfiguration (Fig. 8) auf. In der Einrichtung können Phasenelemente 3 der Computeroptik eingesetzt werden, die in Form von Platten zweierlei Typs ausgeführt sind, die die Laserstrahlung reflektieren bzw. durchlassen. Die Reflexionsplatte ist entweder als Ganzmetallplatte oder mit einer auf die Oberfläche des Mikroreliefs aufgetragenen Reflexionsschicht hergestellt. In beiden Fällen sind die Mikroreliefkämme 14 mit einer sich vom Fuss a zur Spitze b hin in einem Wertebereich von 0 bis λ/2 ändernden Höhe h ausgeführt. Für die durchlässige Platte ist ein für die Laserstrahlung durchsichtiges Material gewählt, währnd die Mikroreliefkämme 14 mit einer Höhe h gewählt sind, die sich vom Fuss a des Kammes zu dessen Spitze b hin in einem Wertebereich von 0 bis λ/(n - 1) ändert, worin n die Brechungszahl des Materials der Platte ist. Das Phasenelement 3 der Computeroptik sorgt für eine Schwenkung des Laserstrahlenbündels 1 um einen Winkel von (Fig. 3) und führt seine räumliche Phasenmodulation in der Weise durch, dass der Querschnitt des Bündels 1 im Bearbeitungsbereich 2 eine Sollform mit einer vorgegebenen Intensitätsverteilung über diesen Bereich 2 aufweist. Praktisch wird hierbei fast die gesamte Energie des Laserstrahlenbündels 1 in den Bearbeitungsbereich 2 gerichtet.

Die Einrichtung ist für die Arbeit in den Betriebsarten mit verschiedenen Arbeitsgängen bestimmt, die auf der Temperatureinwirkung der Infrarot-Laserstrahlung (Profil-, gruppenweises Lochen, Stempeln, Auftragen dekorativer Muster) auf verschiedene Materialien (beispielsweise Plexiglas, Gummi) beruhen.

Die Einrichtung funktioniert wie folgt. In das optische System 12 (Fig. 6) wird ein Phasenelement 3 der Computeroptik eingesetzt, das in Form einer Reflexionsplatte hergestellt ist und derartig justiert wird, dass in der Arbeitsstellung ein Bild des Bearbeitungsbereichs 2 der Sollform erzeugt wird. Das zu bearbeitende Objekt 5 (Probe) wird auf dem Arbeitstisch 13 in der Arbeitsstellung befestigt, d.h. seine Oberfläche wird mit der Bildebene des Bearbeitungsbereichs 2 zur Deckung gebracht. Dann werden in der gewählten Betriebsart der Laserstrahlungsunterbrecher 1 mit Hilfe seiner Steuereinheit 11' eingeschaltet, der Verschluss 10 durch Betätigung der Einheit 10' geöffnet und der Bereich 2 der Oberfläche des Objekts 5 im Laufe der gewählten Zeit bestrahlt. Die Einrichtung kann auch ohne Laserstrahlungsunterbrecher 11 verwendet werden. In diesem Fall wird die Wirkdauer durch den mit einem Zeitrelais versehenen Verschluss 10 geregelt.

Beispiel 1

Als Laserstrahlungsquelle 8 (Fig. 6) ist ein kontinuierlich strahlender $CO_2$-Laser 9 der Leistung von 100 W gewählt, der auf einer Wellenlänge λ = 10,6 μm arbeitet. Die Energie und die Einwirkdauer wurden mit Hilfe eines Unterbrechers 11 und eines elektromechanischen Verschlusses 10 variiert. Das Laserstrahlenbündel 1 wies einen Querschnitt S kreisrunder Form mit einer Gauss-Intensitätsverteilung über diesen auf. Das Laserstrahlenbündel 1 wurde mit Hilfe des Teleskops 6 erweitert und auf ein Phasenelement 3 der Computeroptik gerichtet, das in Form einer 2 mm dicken Kupferplatte mit einer oben beschriebenen Milrorelief-Oberflächenstruktur hergestellt war. Die Höhe der Mikroreliefkämme 14 überschritt $h_{max} = λ/2 = 5,3$ μm nicht.

Für jeden Arbeitsgang wurde ein jeweiliges Phasenelement 3 der Computeroptik gewählt.

Betrachten wir machen Arbeitsergebnisse der Einrichtung.

Beim Lochen eines Systems von Löchern in nichtmetallischen Dünnblechen wird ein grosser Effekt durch Benutzung eines Phasenelements 3 der Computeroptik erzielt, das das Bündel 1 in der Weise transformiert, dass dieses in vier Teile zerfällt, deren jeder im Bearbeitungsbereich 2 zu einem Punkt fokussiert wird. Die erzeugten Löcher waren identisch nach der Form bei einem genau eingehaltenen Abstand zwischen ihnen. Auf solche Weise wurden mit einemmal Leistung, Bearbeitungsgrad und -genauigkeit erhöht.

Beim Einritzen in absorbierenden Feinplatten wird ein grosser Effekt durch Benutzung eines Phasenelements 3 der Computeroptik erreicht, welches das Bündel 1 derart transformiert, dass das Laserstrahlenbündel 1 im Bearbeitungsbereich 2 zu einem 8 mm langen und 0,4 mm dicken Geradenstück mit einer gleichmässigen Intensitätsverteilung $\Gamma$ über die Gesamtlänge fokussiert wird. Für eine Belichtung wurde die Platte längs der Belichtungslinie gespaltet. Die hohe Reproduzierbarkeit der Ergebnisse dieses Arbeitsganges eliminiert praktisch den Ausschuss.

Um auf das Erzeugnis ein dekoratives Muster aufzutragen, wurde ein Phasenelement 3 der Computeroptik ausgenutzt, welches das Laserstrahlenbündel 1 nach der Form zu einem Fleck komplizierter Konfiguration sammelte. Dieses Beispiel veranschaulichte die Kompliziertheit des Musters, das auf das Objekt 5 mit einem Impuls ohne Laserenergieverluste auf einmal. übertragen werden kann. Darüber hinaus wurden Arbeitsgänge zum Aufbringen von Markierungszeichen in Form von Ziffern und Buchstaben durchgeführt.

Das Verfahren zur Bearbeitung eines Objekts mit dem Laserstrahl kann durch ohne Einrichtung vorgenommen werden, die eine Laserstrahlungsquelle 8 (Fig. 9) enthält, auf deren optischer Achse 4 ein optisches System 12 zur Übertragung der Laserstrahlung auf das Bearbeitungsobjekt 5 liegt, welches mindestens ein Phasenelement 3 der Computeroptik enthält. Die Einrichtung umfasst auch eine Steuereinheit 13′ für eine Verschiebung eines Arbeitstisches 13 und eine Vorrichtung 15 mit deren Steuereinheit 15′ für eine Verschiebung des Phasenelements 3 der Computeroptik bezüglich der optischen Achse 4 während der Belichtungszeit. Speziell zur· Grossteilbearbeitung kann der Arbeitstisch 13 konstruktiv in Form eines Zweikoordinatentisches mit Befestigungsmitteln ausgeführt werden, der in einer numerisch gesteuerten Laserwerkzeugmaschine ("Lazernaya i elektronnoluchevaya obrabotka matetialov", Handbuch von N.N.Rykalin e.a., 1985, S. 469) eingesetzt wird.

Das Phasenelement 3 der Computeroptik wird durch die vorrichtung 15 aufgenommen und räumlich entweder längs der optischen Achse 4 des Laserstrahlenbündels 1 mit einer Geschwindigkeit v oder durch Drehen um die eigene Achse mit einer Geschwindigkeit $\omega$ (Fig. 9) verstellt, die konstruktiv in Form eines standardmässig austauschbaren Kopfes ausgeführt werden kann, der mit Befestigungsmitteln und einem Elektromotor zum Drehen dieses Kopfes während der Belichtung (in Fig. 9 nicht angedeutet) versehen ist. In diesem Fall nimmt die Masse der bewegten Baugruppen ab, wodurch ihrerseits die Steuerung der Verschiebung des Phasenelements 3 der Computeroptik erleichtert und die Bearbeitungsgenauigkeit erhöht wird.


Beispiel 2

Es geht· um die Anwendung der Einrichtung (Fig. 9) für die Wärmebearbeitung von Metallteilen (Verfestigung, Glühen, Schweissen, Schneiden u.a.). Als Laserstrahlungsquelle 8 ist ein kontinuierlich strahlender $CO_2$-Laser 9 der Leistung 0,9 kW eingesetzt, der in einem Mehrmodenbetrieb bei einer Wellenlänge $\lambda$ = 10,6 $\mu$m mit einer unregelmässigen Intensitätsverteilung I über den Querschnitt S des Laserstrahlenbündels 1 mit einem Durchmesser von 45 mm arbeitet. Das optische System 12 zur Übertragung der Laserstrahlung auf ein Objekt 5 (Teile oder Rohlinge) beinhaltet ein reflektierendes Phasenelement 3 der Computerlogik, das in Form einer Kupferplatte mit einer Mikroreliefstruktur auf der dem Objekt 5 zugekehrten Oberfläche und mit einem Wärmeaustauscher auf deren entgegengesetzter Seite ausgeführt ist. Die Drehung des Phasenelements 3 der Computeroptik um eine auf seiner Ebene senkrecht stehende Achse geschieht mit Hilfe einer Vorrichtung 15 mit einer Geschwindigkeit $\omega$ = 5 Rad/min. Die Längsbewegung des Objekts 5 mit einer Geschwindigkeit von v ~ 1 mm/min erfolgt mit Hilfe eines durch eine Einheit 13′ gesteuerten Koordinatentisches 13.

Nun soll der Arbeitsgang zur lokalen Entfestigung einer Platine durch ein intensives Durchwärmen vor dem nächstfolgenden Biegearbeitsgang betrachtet werden. Das Bearbeitungsobjekt 5 stellt eine 0,8 mm dicke Platine aus einer Aluminiumlegierung dar. Das gewählte Phasenelement 3 der Computeroptik mit einer Brennweite f = 800 mm transformiert das Ausgangsbündel 1 in der Weise, dass auf der Oberfläche des Objekts ein Fleck der Laserstrahlung in Form eines schmalen Rechtecks der Abmessungen 8 x 2 mm erzeugt wird, das als Einzelelement 7 des Bearbeitungsbereichs 2 dient. Bei der Umdrehung des Phasenelements 3 der Computeroptik verschiebt sich dieser Fleck auf der Oberfläche des Objekts 5, wobei er den gesamten Bearbeitungsbereich 2 kreisrunder Form für die Belichtungszeit aufeinanderfolgend durchläuft. Ist es erforderlich, den Bearbeitungsbereich 2 in Form eines langen Streifens zu bearbeiten, so wird das Objekt 5 für die Belichtungszeit unter einem Bündel 1 verschoben, das einer räumlichen Phasenmodulation unterzogen wurde. In diesem Fall wird auf der Platine ein Streifen erforderlicher Länge und mit einer erforderlichen Breite entfestigt.

Beim Biegen einer durch den Laser vorher entfestigten Platine wurde ein L-Profil der Abmessungen 40x60x200 mm erhalten, das einen inneren Krümmungsradius von ca. 0,8 mm und an den Enden von 3 mm aufweist. Die lokale Entfestigung führt zu einer Verringerung der Biegekraft um das 2 bis 3fache, einer Erhöhung der Stanzbarkeit des Materials, einer Senkung des Arbeitsaufwandes für die Herstellung eines Teiles aus der Platine um das Anderthalbfache durch Wegfall von Nacharbeiten, einer Abnahme des Energieverbrauchs in Zusammenhand mit dem Übergang auf leistungsschwache Schnellpressanlagen, einer Senkung des Aufwandes für die Stanzausrüstung wegen des Wegfalls von Eichoperationen bei der Fertigung des Teiles sowie zu einer Erhöhung der Genauigkeit der Biegestelle.

Das Verfahren zur Bearbeitung eines Objekts mit dem Laserstrahl kann in einer Vielzahl von Bearbeitungsbereichen 2 (Fig. 10) verwirklicht werden. In diesem Fall werden sämtliche Bereiche 2 mit Laserstrahlenbündeln 1 nacheinander bestrahlt, wobei für die Bestrahlung jedes Bearbeitungsbereichs 2 eine eigene räumliche Phasenmodulation verwendet wird, die in Abhängigkeit von der eigenen Intensitätsverteilung I' verwirklicht wird. Hierbei kann die Form des Bearbeitungsbereichs 2 verschieden sein. Dies wird dadurch erreicht, dass in der diese Variante des Verfahrens durchführenden Einrichtung ein Satz von Phasenelementen 3 der Computeroptik enthalten ist, von denen jedes in einer Vorrichtung 16 für deren Auswechslung (Verstellung) und Aufnahme befestigt ist.

Die aufeinanderfolgende Auswechslung der Phasenelemente 3 der Computeroptik kann mit Hilfe verschiedener Varianten der konstruktiven Ausführung der Vorrichtung 16 für deren Auswechslung und Aufnahme, die durch eine Einheit 16' gesteuert wird, beispielsweise mittels einer trommelartigen Vorrichtung oder eines Revolverkopfes vom Typ eines Förderers, vorgenommen werden. In der einfachsten Ausführungsform ist diese Vorrichtung in Form einer Scheibe mit Befestigungsmitteln gefertigt, in deren Ebene sechs Phasenelemente 3 der Computeroptik angeordnet sind, die in Form von Reflexionsplatten hergestellt sind. Die Scheibe wurde durch einen Reversiermotor mit einer geringen Drehzahl in Drehung versetzt. Bei Erreichen der Arbeitsstellung durch ein an die Reihe kommendes Phasenelement 3 der Computeroptik wird es in dieser Stellung festgehalten.

Die Anwendung derartiger Einrichtung steigert die Bearbeitungsleistung, indem die Zeit für die Auf-und Entnahme jedes Phasenelements 3 der Computeroptik, besonders bei der Automatisierung der Vorgänge der Bearbeitung mit dem Laserstrahl, reduziert wird.

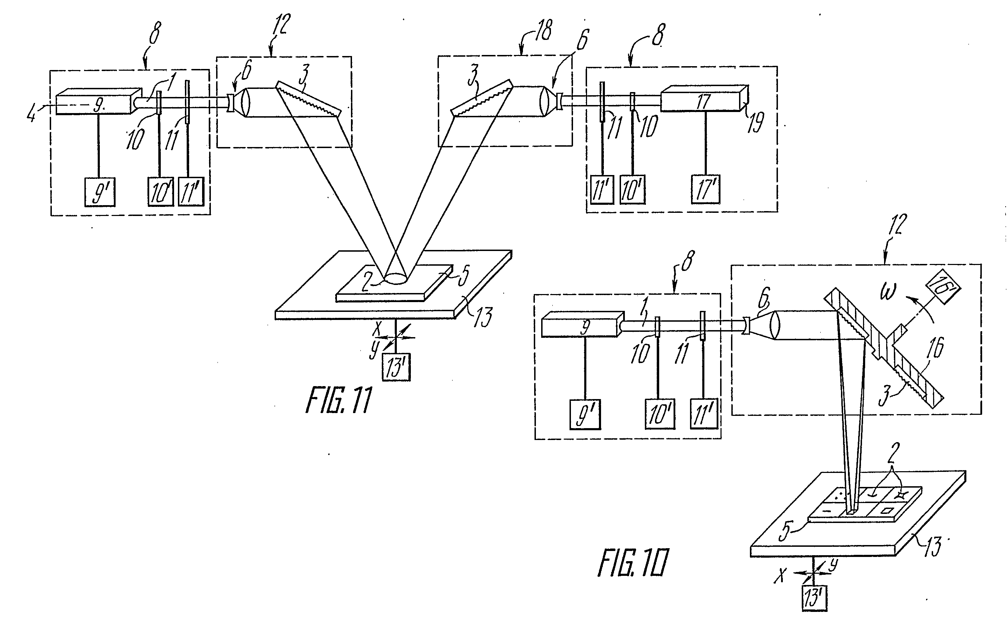

Das Verfahren zur Bearbeitung eines Objekts mit dem Laserstrahl kann auch durch eine Einrichtung durchgeführt werden, die eine Laserstrahlungsquelle 8 (Fig.11) enthält, die zwei Laser 9 und 17 mit Speisequellen 9 bzw. 17' aufweist. Das erste optische System 12 ist auf der optischen Achse 4 des ersten Lasers 9 angeordnet, der Bündel 1 einer unsichtbaren Laserstrahlung emittiert, die für eine energetische Einwirkung auf das Bearbeitungsobjekt 5 vorgesehen ist. Das zweite optische System ist auf der optischen Achse 19 des zweiten Lasers 17 angeordnet, der eine sichtbare Strahlung generiert.

Das (energetische) optische System erzeugt mit Hilfe des Phasenelements 3 der Computeroptik ein unsichtbares Bild des Bearbeitungsbereichs 2 der Sollform mit einer vorgegebenen Intensitätsverteilung I' über diesen. Das optische Lenksystem 18 erzeugt mit Hilfe seines Phasenelements 3 der Computeroptik ein sichtbares Bild des Bearbeitungsbereichs 2 der gleichen Form und Grösse. Diese Bilder werden auf der Stufe der Grobeinstellung zur Deckung gebracht, bevor die Bearbeitung durchgeführt worden ist. die Oberfläche des Objekts 5 wird in der Ebene der zusammengefallenen Bilder angeordnet, wo in dieser Ebene nur eine sichtbare (leistungsschwache) Strahlung vorhanden ist, die den bearbeitungsbereich 2 sichbar macht. Danach Wird der Verschluss 10 des ersten Lasers 9 geöffnet und eine Bestrahlung durchgeführt. Auf solche Weise werden die Bündel 1 der unsichtbaren Bearbeitungslaserstrahlung auf die Bearbeitungsbereiche 2 der Oberfläche des Objekts 5 durch die Bündel 1 der sichtbaren Laserstrahlung mit der gleichen Intensitätsverteilung gelenkt.

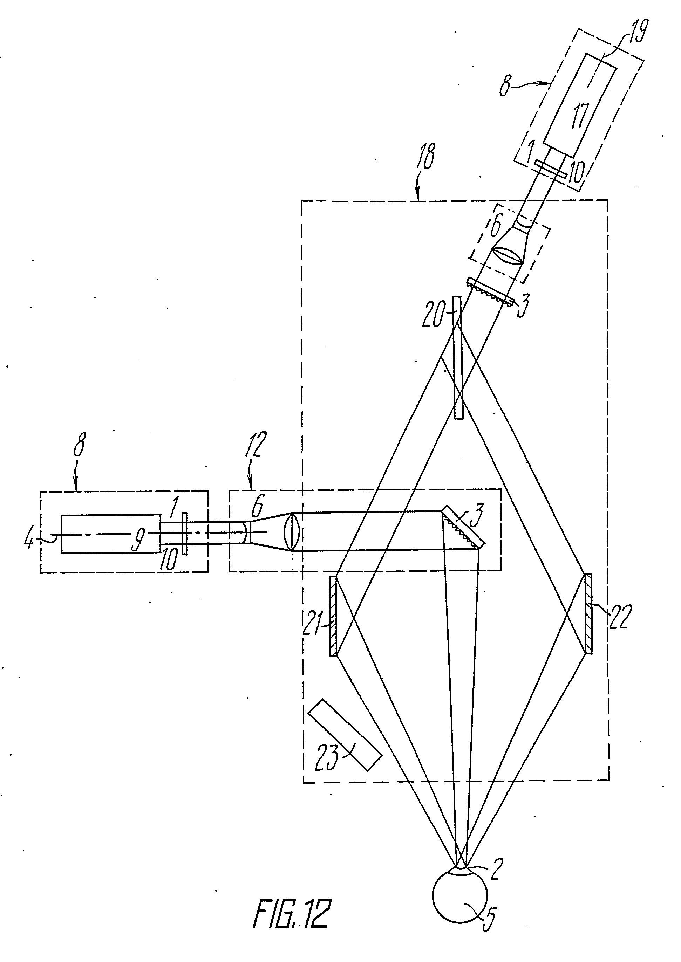

In dieser Weise kann eine hochgenaue Bearbeitung verschiedenartigster Objekte 5, beispielsweise biologischer, mittels Laser vorgenommen werden. Die nachstehend beschriebene Laseranlage (Fig. 12) ist für die Augen-Mikrochirurgie, speziell für ein ring-, kreuz- und bogenförmiges Zerschneiden der Hornhaut des Auges, bestimmt.

In diesem Fall ähnelt die Einrichtung im gangen derjenigen, die in Fig. 11 dargestellt ist. Hier umfassen die optischen Systeme 12 (Fig. 12) und 18 Teleskope 6, die am Eingang derselben angeordnet sind. Weiterhin sind im optischen System 18 hinter dem Phasenelement 3 der Computeroptik in Form einer durchlässigen Platte eine halbdurchsichtige Teilungsplatte 20, Drehspiegel 21, 22 und ein Ophthalmoskop 23 angeordnet.

Die Einrichtung wirkt wie folgt. Zuerst wird eine Grobeinstellung der optischen Systeme 12 und 18 der Einrichtung vorgenommen, die eine vollständige Deckung des sichtbaren und des unsichtbaren Bildes des Bearbeitungsbereichs 2 in der Arbeitsstellung sichert. Beim geschlossenen Schieber 10, der das Bündel 1 der unsichtbaren Laserstrahlung vom $CO_2$-Laser 9 sperrt, wird das Bearbeitungsobjekt 5 in eine Arbeitsstellung gebracht, die durch ein räumlich moduliertes Bündel 1 der sichtbaren Laserstrahlung von einem Helium-Neon-Laser 17 sichtbar gemacht wird, wobei die Lenk genauigkeit vom Arzt über das Ophthalmoskop 23 überwacht wird. Danach wird der Schieber 10 geöffnet und eine kurzzeitige Belichtung des Objekts 5, d.h. der Hornhaut des Auges des Patienten, vorgenommen. Zur Korrektur der Myopie wird ein Phasenelement 3 der Computeroptik eingesetzt, das ein kreuzförmiges Laserstrahlenbündel 1 erzeugt, während zur Entfernung der Katarakt ein Phasenelement 3 der Computeroptik eingesetzt wird, das ein bogenförmiges Laserstrahlenbündel 1 erzeugt.

Diese Einrichtung gestattet es auch, eine postopetative Lasertherapie durch Bestrahlung der zerschnittenen Teile der Hornhaut mit einem Laserstrahlenbündel 1 des Lasers 17, das durch ein entsprechendes Phasenelement 3 der Computeroptik räumlich moduliert wird, durchzuführen, was den Vorgang der Heilung beschleunigt.

Ausser für medizinische Zwecke kann die vorliegende Erfindung eine weite Anwendung in der Industrie, besonders in den Fällen finden, wo es zur Genauigkeitserhöhung notwendig ist, den Bearbeitungsbereich 2 visuell mit einem Lichtfle erforderlicher Kontur, beispielsweise bei einer Markierung, zu bezeichnen.


Beispiel 3

Als Beispiel der industriellen Anwendung einer in Fig. 11 dargestellten Laseranlage dient in kombiniertes Lochen von Profil-, beispielsweise Quadratlöchern, oder von Gruppen der Löcher in Keramikplatten (für Mikroschaltkreise in der Elektronik) unter einer Verbesserung der Güte der erhaltenen Löcher. Die kombinierte Bearbeitung des Objekts 5 aus Keramik ist auf die Art eines optischen Durchschlages eines Gemisches aus einem verdampften Material und einem umgebenden Gas, auf hydrodynamische Vorgänge in der Schmelze, auf den Einfluss einer sich bildenden Kaverne und auf andere, dem Material des Objekts 5 eigene Besonderheiten zurückzuführen. Speziell diente als Bearbeitungsobjekt 5 eine 1 mm dicke Keramikplatte. Der Bearbeitungsbereich ist in Form von Eckpunkten eines Quadrats vorgegeben.

Als eine unsichtbare Strahlung generierender Laser ist ein $CO_2$-Impulslaser mit einer Wellenlänge $\lambda$ = 10,6 $\mu$m, mit einer Impulsdauer $\tau \sim 10^{-4}$ s und einer Impulenergie E = 2J gewählt. Als eine sichtbare Strahlung generierender Laser ist ein Rubinlaser mit einer Wellenlänge $\lambda$ = 0,69 $\mu$m, einer Impulsdauer $\tau \approx 10^{-3}$s, einer Impulsenergie E = 2J gewählt. In den optischen Systemen 12 und 18 wurden Phasenelemente 3 der Computeroptik mit einer gleichen Fokussierung auf vier Punkte, die nach der Form der Eckpunkte des Quadrats liegen, benutzt. Auf den Bearbeitungsbereich 2 wurde zuerst mit einem Strahlungsimpuls des Rubinlasers 17 mit einer Energiedichte von $10^8$ J/m$^2$ eingewirkt. Die Laserstrahlung erzeugte um den Bearbeitungsbereich 2 herum eine nach der Dicke stabile Schmelze. Dann wurde der Bereich 2 mit einem Strahlungsimpuls vom $CO_2$-Laser bestrahlt, der für eine Entfernung und Verdampfung der Schmelze sorgt. Mit zwei Impulsen wurden also auf einmal vier Löcher von hoher Güte mit einem genau eingehaltenen Abstand zwischen ihnen ausgeführt.

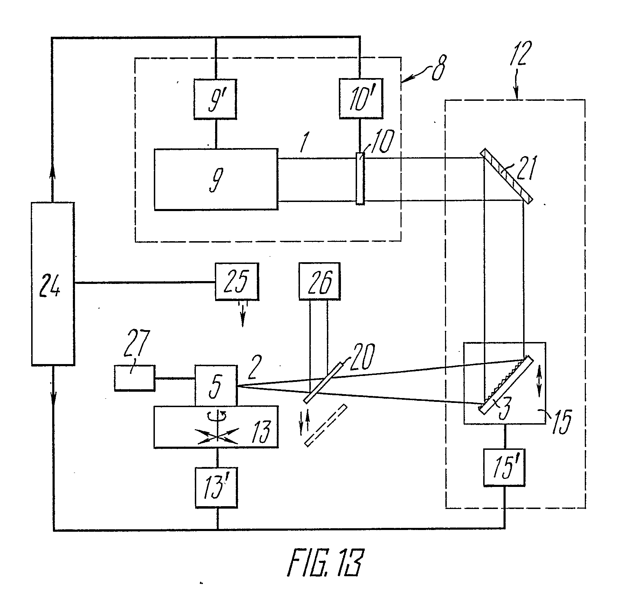

Die das erfindungsgemässe Verfahren zur Bearbeitung von Objekten mit dem Laserstrahl durchführende Einrichtung kann automatisch sein. In diesem Fall gehört zur Einrichtung (Fig. 13) ein Elektronenrechner (EDVA)24, der zur programmgemässen Steuerung der Betriebsarten der Grundbaugruppe und -geräte der Einrichtung vorgesehen ist. In die Laserstrahlungsquelle 8 gehen ein Laser 9 mit einer Speisequelle 9' und ein Verschluss 10 mit einer elektrischen Steuereinheit 108 ein, der zur Dosierung der Laserenergie bei der Bearbeitung bestimmt ist. Das optische System 12 zur Übertragung der Laserstrahlung auf das Bearbeitungsobjekt 5 umfasst einen Drehspiegel 21 und ein Phasenelement 3 der Computeroptik 3, das in einer Vorrichtung 15 mit einer Steuereinheit 15' angeordnet ist. Darüber hinaus gehört zur Einrichtung ein System 25 für die Zuführung von Arbeitsmedien zum Bearbeitungsbereich 2 und ein Überwachungssystem 26, das einer Grobeinstellung des optischen Sys tems 12 und der Überwachung des Ablaufes des technologischen Prozesses dient. Das Bearbeitungsobjekt 5 wird auf einem beweglichen Arbeitstisch 13 fixiert, der mit einer Steuereinheit 13' für dessen Verschiebung versehen ist. Am Objekt 5 wird ein Wärmefühler mit dem Ausgang auf ein Gerät 27 befestigt. Auf dem Arbeitstisch 13 kann das Objekt 5 von einem Operateur oder durch einen Manipulatorroboter (in Fig. 13 nicht gezeigt) aufgestellt werden. Der Elektronenrechner 24 ist elektrisch mit der Speiseeinheit 9' des Lasers 9, mit der Steuereinheit 10' für den Energiezuteiler 10, mit der Steuereinheit 15' für die Vorrichtung 15 zur Verschiebung des Phasenelements 3 der Computeroptik, mit der Einheit 13' für eine Verschiebung des Arbeitstisches 13 und mit dem System 25 für die Zuführung von Arbeitsmedien verbunden. Dies gestattet es, diesen oder jenen Arbeitsvorgang zur Bearbeitung mit dem Laserstrahl nach einem in den Elektronenrechner 24 eingegebenen Programm durchzuführen.

Die Arbeit des Operateuers besteht in der Anordnung und Befestigung des Objekts 5 auf dem Arbeitstisch 13, der Betätigung der Einrichtung, Überwachung des Ablaufes des Bearbeitungsvorganges mittels des Systems 26 und der Temperaturüberwachung nach dem Gerät 27. Falls erforderlich, schaltet der Operateuer unter Beachtung der technologischen Besonderheiten des Bearbeitungsvorganges das System 25 für die Zuführung von Arbeitsmedien (beispielsweise von einem chemisch aktiven oder inerten Gas) an.

Beispiel 4

Als Bearbeitungsobjekt 5 diente ein Hohlzylinder von 0,3 mm Dicke mit einer auf seine Oberfläche aufgetragenen Absorptionsschicht. Der Bearbeitungsbereich 2 wurde in Form eines Geradenstücks mit einer Breite von höchstens 2 mm vorgegeben. Als Laser 9 trat ein kontinuierlich strahlender $CO_2$-Laser mit einer Wellenlänge $\lambda = 10{,}6\ \mu m$ und einer Leistung von 0,9 kW auf. Das Laserstrahlenbündel 1 mit einem Durchmesser $\emptyset = 40$ mm wies eine unregelmässige Intensitätsverteilung über den Querschnitt auf. Im optischen System 12 wurde ein reflektierendes Phasenelement 3 der Computeroptik angeordnet, das in Form einer Kupferplatte von $H = 2$ mm Dicke hergestellt. Dieses Phasenelement 3 der Computeroptik führte eine Fokussierung zu einem Geradenstück von 10 mm Länge durch. Dem Bearbeitungsbereich 2 wurde gleichzeitig mit der Einschaltung der Laserstrahlungsquelle 8 ein Arbeitsmedium - ein Strahl eines sauerstoffhaltigen Gemisches - mit einer Durchflussmenge von 2 m³/min zugeleitet. Für die Zeit einer einmaligen Bestrahlung mit einem Laserstrahlenbündel 1 m mit einer Leistungsdichte von $10^8$ W/m² wurde im Objekt 5 eine Schlitzöffnung der Abmessungen 1 x 10 mm gelocht. Anschliessend wurde das Objekt 5 mit der Bewegung des Tisches 13 um einen bestimmten Winkel verschwenkt und erneut bestrahlt. Ferner wurde das Lochen der Schlitze auf dem gesamten Gürtel des Kreisumfanges des Objekts 5 bei dessen jeder Schwenkung wiederholt. Danach wurde das Phasenelement 3 der Computeroptik um einen bestimmten Abstand bewegt, und es wurde auf dem nächsten Gürtel des Objekts 5, dann auf dem dritten usw. gelocht.

Das Lochen der Schlitze wurde schachbrettförmig auf der gesamten Oberfläche des Objekts 5 durchgeführt, was dessen höhere mechanische Festigkeit und Steifigkeit sicherte. Der beschriebene Arbeitsgang wurde zur Herstellung von Rohrfiltern verwendet.

Das erfindungsgemässe Verfahren und die Einrichtung zur Bearbeitung von Objekten mit dem Laserstrahl ermgölichen eine gleichzeitige Verbindung folgender Funktionsfähigkeiten: Oberflächenbearbeitung beim Objekt 5 nach den Bearbeitungsbereichen 2 der Sollform, Einstellung einer erforderlichen Leistungsdichteverteilung im Bearbeitungsbereich 2 im Vorgang der Bearbeitung des Objekts 5, Konzentration der Energie des in den Bearbeitungsbereich 2 gerichteten Laserstrahlenbündel 1 sowie Lenkung des Laserstrahlenbündels 1 auf das Bearbeitungsobjekt 4 unter einem Sollwinkel in Ab hängigkeit von den fertigungstechnischen Forderungen seitens des Vorganges der Bearbeitung des Objekts 5.

Die Leistungssteigerung wird im erfindungsgemässen Verfahren zur Bearbeitung eines Objekts 5 mit dem Laserstrahl auf dem Wege einer gleichzeitigen gruppenweisen Bearbeitung des Objekts, einer Verkürzung der Dauer des Bearbeitungsablaufs durch Beseitigung von Hilfsarbeitsgängen und durch Anwendung von Hochleistungsmaschinen in der Fertigungskette erzielt.

Die Erhöhung der Güte des Bearbeitungsobjekts 5 wird dadurch erreicht, dass dem Objekt 5 eine Gesamtheit von Fertigungs- und Betriebseigenschaften verliehen wird, die eine hohe spezifische und Gestaltfestigkeit sowie eine hohe Langlebigkeit des Objekts 5 nach der Bearbeitung mittels Laser gewährleisten.

Industrielle Anwendbarkeit

Das erfindungsgemässe Verfahren und die Einrichtung zur Bearbeitung von Objekten mit dem Laserstrahl können eine weite Anwendung finden; in vielen Zweigen der Industrie, beispeilsweise bei der Metallbearbeitung - zur lokalen thermischen Verfestigung der Werkstückoberfläche, darunter zur Härtung und Legierung sowie zur thermischen Entfestigung der Werkstückoberfläche mit einer anschliessenden mechanischen Bearbeitung (z.B. Biegen und Stanzen von Teilen komplizierter Konfiguration), zum gruppenweisen Lochen, zum Schweissen, Schneiden von Rohren, Blech- und Stabmaterial, zur Markierung von Teilen aus brüchigem und hochfestem Material; bei der Bearbeitung von nichtmetallischen Stoffen und bei der Herstellung von Erzeugnissen aus Kunststoffen und anderen Polymeren - zum Stanzen von Teilen komplizierter Konfiguration sowie zum Lochen von Öffnungen vorgegebener Form und Gesamtheit;

in der Mikroelektronik und dem Gerätebau- zur Bearbeitung (Zerschneiden) der Oberflächenschicht von Platten und anderen Bauelementen von Mikroschaltkreisen für eine erforderliche Tiefe und nach einer vorgegebe nen Kontur, zum Sintern von mikrooptischen Elementen für einen Lichtwellenleiter-Übertragungskanal, zur Bearbeitung von Dünnschichten für integrierte Schaltkreise, zum Ritzen und Schneiden von Keramiksubstanten komplizierter Form zur Markierung von Teilen aus Silizium, Keramik und anderen festen und brüchigen Stoffen, zum gruppenweisen Lochen von Öffnungen vorgegebener Form und Gesamtheit;

in der Leichtindutrie - zum Zuschneiden von Stoffen aus Leder, von Geweben Natur- und Kunstfasern, zur Fertigung von Lochkarten;

in der Produktion von Baustoffen aus Keramik, Tuff, Glas und anderen festen und brüchigen Materialien -zur Oberflächenbearbeitung nach einem vorgegebenen Muster durch Verglasung, zur Markierung, zum gruppenweisen Lochen von Öffnungen erforderlicher Form und Gesamtheit;

in der Lithografie - zur Herstellung von Fotoschablonen.

Darüber hinaus können das erfindungsgemässe Verfahren und die Einrichtung in der Medizin für die Durchführung von chirurgischen Operationen, beispielsweise von ophthalmologischen, sowie zur internistischen Behandlung von Erkrankungen verwendet werden.

## Ansprüche

1. Verfahren zur Bearbeitung eines Objekts durch Bestrahlung seiner Oberfläche mit mindestens einem Laserstrahlenbündel (1) nach Bearbeitungsbereichen (2) der Sollform, dadurch **gekennzeichnet,** dass eine räumliche Phasenmodulation des Laserstrahlenbündels (1) angewendet wird, die in Abhängigkeit von einer vorgegebenen Intensitätsverteilung ($I'$) über den Bearbeitungsbereich (2) unter gleichzeitiger Schwenkung vorgenommen wird.

2. Verfahren zur Bearbeitung eines Objekts mit dem Laserstrahl nach Anspruch 1, dadurch **gekennzeichnet,** dass das der räumlichen Phasenmodulation unterzogene Bündel (1) in Drehung um seine optisohe Achse (4) versetzt wird.

3. Verfahren zur Bearbeitung eines Objekts mit dem Laserstrahl nach den Ansprüchen 1, 2, bei dem die Bearbeitung mit mindestens einem Bündel (1) einer unsichtbaren Laserstrahlung durchgeführt wird, dadurch **gekennzeichnet,** dass mindestens ein die Bearbeitung durchführendes Bündel (1) auf die Bearbeitungsbereiche (2) der Oberfläche des Objekts (5) durch Bündel (1) einer sichtbaren Laserstrahlung mit der gleichen Intensitätsverteilung gelenkt wird.

4. Einrichtung zur Durchführung des Verfahrens nach Anspruch 1, 2 oder 3, die eine Laserstrahlungsquelle (8) enthält, auf deren optischer Achse (4) ein optisches System (12) zur Übertragung der Laserstrahlung auf das Objekt (5) liegt, dadurch **gkennzeichnet,** dass das optische System (12) mindestans ein Phasenelement (3) der Computeroptik aufweist, das für eine Schwenkung des Bündels (1), für seine räumliche Phasenmodulation und eine Umverteilung seiner Intensität (I) über den Bearbeitungsbereich (2) der Sollform sorgt und in Form einer Reflexions- oder einer durchlässigen Platte mit einer Mikrorelief-Oberflächenstruktur ausgeführt ist, die in Abhängigkeit von der Form des Bearbeitungsbereichs (2), der Intensitätsverteilung ($I'$) der Laserstrahlung über diesen und von der Wellenlänge (λ) der letzteren bestimmt wird, wobei die Mikroreliefkämme (14) mit einer Höhe (h) ausgeführt sind, die sich vom Fuss (a) zur Spitze (b) hin in einem Wertebereich von 0 bis λ/2 für die Reflexionsplatte und von 0 bis λ/(n-1) für die durchlässige Platte ändert, worin n die Brechungszahl des Materials der durchlässigen Platte ist.

5. Einrichtung nach Anspruch 4, dadurch **gekennzeichnet,** dass als Strahlungsquelle (8) eine Quelle gewählt ist, die zwei Laser (9 und 17) umfasst, von denen einer eine unsichtbare und anderer eine sichtbare Strahlung emittiert, wobei auf der optischen Achse (19) des zweiten Lasers (17) ein zweites optisches System (18) liegt, das ein sichtbares Bild des Bearbeitungsbereichs (2) der Sollform erzeugt, das mit dem unsichtbaren Bild des Bearbeitungsgereichs (2) optisch zusammenfällt.

6. Einrichtung nach Anspruch 4 oder 5, dadurch **gekennzeichnet,** dass sie eine Vorrichtung (15) zur Verschiebung des Phasenelements (3) der Computeroptik bezüglich der optischen Achse (4) der Quelle (8) enthält.

7. Einrichtung nach Anspruch 4 oder 5, oder 6, dadurch **gekennzeichnet,** dass das optische System (9) zur Übertragung der Laserstrahlung auf das Objekt (5) einen Satz von Phasenelementen (3) der Computeroptik beinhaltet, die in einer Vorrichtung (16) zu deren Verschiebung und Aufnahme befestigt sind.

FIG. 1

FIG. 2

FIG. 3

FIG. 4

FIG. 5

FIG. 6

FIG. 7

FIG. 8

FIG. 9

FIG. 11

FIG. 10

FIG.12

FIG. 13

# INTERNATIONAL SEARCH REPORT

**I. CLASSIFICATION OF SUBJECT MATTER** (if several classification symbols apply, indicate all) •

According to International Patent Classification (IPC) or to both National Classification and IPC

IPC⁴: B 23 K 26/00

**II. FIELDS SEARCHED**

| Minimum Documentation Searched 7 | |
|---|---|
| Classification System | Classification Symbols |
| IPC⁴ | B 23 K 26/00, A 61 F 9/00, C 21 D 1/09 |

Documentation Searched other than Minimum Documentation
to the Extent that such Documents are Included in the Fields Searched •

**III. DOCUMENTS CONSIDERED TO BE RELEVANT •**

| Category • | Citation of Document, 11 with indication, where appropriate, of the relevant passages 12 | Relevant to Claim No. 13 |
|---|---|---|
| A | US, A, 4424435, (Itec Corporation), 3 January 1984 (03.01.84), see the claims & Figure | 1,4 |
| A | DE, A1, 3600591, (International Standard Electric Corp.), 17 July 1986 (17.07.86) see the claims & figure | 1,4 |
| A | US, A, 4475027, (Allied Corporation), 2 October 1984,(02.10.84), see the claims, figure 8 | 4 |

* Special categories of cited documents: 10

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art.

"&" document member of the same patent family

**IV. CERTIFICATION**

| Date of the Actual Completion of the International Search | Date of Mailing of this International Search Report |
|---|---|
| 16 May 1988 (16.05.88) | 1 July 1988 (01.07.88) |
| International Searching Authority | Signature of Authorized Officer |
| ISA/SU | |

Form PCT/ISA/210 (second sheet) (January 1985)